# EUROPÄISCHE PATENTANMELDUNG

(11) **EP 4 428 959 A1**
(43) Veröffentlichungstag der Anmeldung: **11.09.2024**
(21) Anmeldenummer: 23160646.8
(22) Anmeldetag: 08.03.2023
(51) Int. Cl.: H01M 8/0232, H01M 8/0245, C25B 9/00

(54) **BIPOLARPLATTEN-ELEKTRODENANORDNUNG UND VERFAHREN**

(71) Anmelder: Melicon GmbH, 41836 Hückelhoven (DE)
(72) Erfinder: MÜLLER, Ulrich, 41836 Hückelhoven (DE)
(74) Vertreter: Brinkmann & Partner

(57) **Zusammenfassung**

Die Erfindung betrifft eine Bipolarplatten-Elektrodenanordnung einer Brennstoffzelle oder einer Elektrolysevorrichtung, aufweisend einen eine Gasdiffusionselektrode ausbildenden Stapel aus schichtweise angeordneten Streckmetalllagen und eine Bipolarplatte, wobei der Stapel in Stapelrichtung wenigstens einendseitig von einer äußeren Streckmetalllage begrenzt ist, dadurch gekennzeichnet, dass die äußere Streckmetalllage flächenhaft mit der Bipolarplatte stoffschlüssig verbunden ist.

## Beschreibung

Die Erfindung betrifft eine Bipolarplatten-Elektrodenanordnung einer Brennstoffzelle oder einer Elektrolysevorrichtung, ein Verfahren zur Herstellung einer Bipolarplatten-Elektrodenanordnung einer Brennstoffzelle oder einer Elektrolysevorrichtung.

Brennstoffzellen sowie Elektrolysevorrichtungen sind aus dem Stand der Technik an sich bekannt. So ist eine Elektrolysevorrichtung als eine Vorrichtung zu verstehen, die mit Hilfe von elektrischem Strom eine Stoffumwandlung, die sogenannte Elektrolyse, ermöglicht. Entsprechend der Vielfalt an unterschiedlichen Elektrolysearten gibt es auch eine Vielzahl von unterschiedlichen Elektrolysevorrichtungen. Beispielsweise kann mittels einer Elektrolysevorrichtung für eine Wasserstoffelektrolyse Wasser in Wasserstoff und Sauerstoff aufgespalten werden.

Eine derartige Elektrolysevorrichtung kann als sogenannte PEM-Elektrolysevorrichtung ausgebildet sein, wobei PEM (engl. Proton-Exchange-Membrane) eine protonendurchlässige Membran beschreibt. Die protonendurchlässige Membran ist üblicherweise zwischen zwei Elektroden, der Anode und der Kathode, angeordnet. Darüber hinaus ist an der Anode eine erste Bipolarplatte und an der Kathode eine zweite Bipolarplatte angeordnet, wobei die Bipolarplatten dazu ausgebildet sind Reaktionsgase zu leiten. Die Membran, die Elektroden sowie die Bipolarplatten können zusammenfassend als Elektrolysezelle bezeichnet werden. Im Falle einer Verwendung mehrerer Elektrolysezellen verbindet die Bipolarplatte zudem die Anode einer Elektrolysezelle mit der Kathode der benachbarten Elektrolysezelle elektrisch leitend.

Bei der vorbeschriebenen Ausführungsform wird typischerweise anodenseitig destilliertes Wasser zugeführt und an der protonendurchlässigen Membran zu Wasserstoff und Sauerstoff aufgespalten. Das Wasser wird dabei an der Anode zu Sauerstoff oxidiert. Die Protonen passieren die protonendurchlässige Membran. Kathodenseitig wird Wasserstoff produziert. Üblicherweise werden mehrere der vorbeschriebenen Elektrolysezellen zur Leistungssteigerung zu einem Elektrolysezellenstapel bzw. Stack über- bzw. nebeneinanderliegend angeordnet. Die Anordnung der einzelnen Elektrolysezellen erfolgt dabei in der Regel in einer Rahmenkonstruktion, die die einzelnen Elektrolysezellen zusammenpresst, um einen Kontakt der einzelnen Elektrolysezellen untereinander zu ermöglichen.

Brennstoffzellen sind elektrochemische Energiewandler und kommen in mobilen sowie stationären Anwendungen zum Einsatz. Mit Hilfe von Brennstoffzellen wird eine chemische Reaktionsenergie eines kontinuierlich zugeführten Brennstoffs, beispielsweise Wasserstoff, und eines Oxidationsmittels, in der Regel Sauerstoff, in elektrische Energie umgewandelt. Hierzu weisen Brennstoffzellen üblicherweise eine Anordnung auf, die gemäß der bereits vorbeschriebenen Elektrolysevorrichtung eine zwischen zwei Elektroden, der Anode und der Kathode, angeordnete Membran sowie jeweils eine an den Elektroden angeordnete Bipolarplatte aufweist. Im Falle einer Verwendung mehrerer Brennstoffzellen verbindet die Bipolarplatte zudem die Anode einer Brennstoffzelle mit der Kathode der benachbarten Elektrolysezelle elektrisch leitend.

Der Brennstoff wird üblicherweise über jeweils eine Bipolarplatte zum Anodenbereich und das Oxidationsmittel zum Kathodenbereich geführt. An der Anode wird der Brennstoff katalytisch unter Abgabe von Elektronen oxidiert. Die verbleibenden Ionen gelangen durch die Membran zu der Kathode, wo sie mit dem der Kathode zugeführten Oxidationsmittel sowie den zur Kathode geleiteten Elektronen zu einem Reaktionsprodukt, im Falle der vorbeschriebenen Ausführung zu Wasser, reagieren. Vergleichbar mit der vorbeschriebenen Elektrolysezellenanordnung, welche die Anordnung mehrerer Elektrolysezellen zu einem Elektrolysezellenstapel beschreibt, werden üblicherweise auch mehrere Brennstoffzellen zu einem Brennstoffzellenstapel bzw. Stack über- bzw. nebeneinanderliegend angeordnet, um eine Leistungssteigerung zu erzielen. Die Anordnung der einzelnen Brennstoffzellen erfolgt in der Regel auch in einer Rahmenkonstruktion, die die einzelnen Brennstoffzellen zusammenpresst, um einen Kontakt der einzelnen Brennstoffzellen untereinander zu ermöglichen.

Der Bipolarplatte kommt hinsichtlich Effizienz und Leistungsdichte von Brennstoffzellen und Elektrolysevorrichtungen eine entscheidende Bedeutung zu. Sie dient unter anderem der gleichmäßigen Verteilung der Reaktionsgase, der Abführung oder Zuführung von Reaktionswärme sowie der Weiterleitung von elektrischem Strom innerhalb des Stacks von Zelle zu Zelle.

Aus der EP 2 985 096 B1 ist diesbezüglich eine Gasdiffusionselektrode für eine Brennstoffzelle oder eine Elektrolysevorrichtung bekannt. Die Gasdiffusionselektrode weist eine Mehrzahl von schichtweise angeordneten Streckmetalllagen auf, wobei benachbarte Streckmetalllagen in Kontaktpunkten ihrer einander zugewandten Flachseiten mittels Widerstands-Impulsschweißen flächenhaft miteinander verbunden sind. Vorzugsweise weisen die Streckmetalllagen, die weiter von der Membran entfernt sind, größere Maschenweiten auf, um eine gewisse Federwirkung zu erzielen. Die Bipolarplatte wird auf die Streckmetalllage aufgelegt, die die Gasdiffusionselektrode auf der membranentfernten Seite abschließt. Bei der abschließenden Herstellung eines mehrzelligen Stacks werden die Zellen mit hohen Drücken von bis zu mehr als 50 bar verpresst. Die Bipolarplatte ist im Stand der Technik daher auf die ihr zugewandte Streckmetalllage der Elektrode aufgepresst.

Aufgrund der Federeigenschaften der miteinander zu Stacks verpressten Zellen treten Setzungserscheinungen auf. Überschreiten diese Setzerscheinungen eine gewisse Grenze, so ist für den bestimmungsgemäßen Betrieb ein vollflächiges Anliegen der Zellen nicht mehr gewährleistet. Zudem erfolgt bei bestimmungsgemäßem Betrieb eine Oxidbildung innerhalb der jeweiligen Zelle, wobei die Oxidbildung insbesondere durch den anodenseitig anliegenden Sauerstoff verursacht wird. Die Bildung einer Oxidschicht innerhalb einer Zelle vermindert mit zunehmender Betriebsdauer ein vollflächiges Anliegen der Elektrode und der Bipolarplatte, wodurch die Kontaktierung der Elektrode und der Bipolarplatte untereinander mit fortschreitender Betriebsdauer vermindert wird und ein bestimmungsgemäßer Betrieb der Brennstoffzelle oder Elektrolysevorrichtung durch beeinträchtigten Elektronentransport nicht mehr gewährleistet ist.

Es hat sich herausgestellt, dass insbesondere der Kontaktbereich zwischen Bipolarplatte und Gasdiffusionselektrode zu vergleichsweise starker Oxidbildung neigt, wodurch der ohmsche Widerstand immer weiter steigt. Um die Produktionsrate auf einem gleichbleibenden Niveau zu halten, sind bei steigendem ohmschen Widerstand höhere Ströme einzusetzen. Die Kosten für einen bestimmungsgemäßen Betrieb bspw. eines Elektrolyseurs hängen in erster Linie vom Stromverbrauch ab. Der Kostenanteil liegt bei circa 70%. Steigt nun der ohmsche Widerstand, so hat dies einen höheren Stromverbrauch zur Folge oder bei gleichbleibendem Stromverbrauch sinkt die Umwandlungsrate. Diesen Nachteil gilt es zu überwinden.

Ausgehend von dem vorbeschriebenen Stand der Technik ist es die **Aufgabe** der Erfindung, eine aus dem Stand der Technik bekannte Brennstoffzelle oder Elektrolysevorrichtung hinsichtlich Stromverbrauch und Lebensdauer zu verbessern.

Zur **Lösung** dieser Aufgabe wird mit der Erfindung eine Bipolarplatten-Elektrodenanordnung einer Brennstoffzelle oder einer Elektrolysevorrichtung vorgeschlagen, aufweisend einen eine Gasdiffusionselektrode ausbildenden Stapel aus schichtweise angeordneten Streckmetalllagen und eine Bipolarplatte, wobei der Stapel in Stapelrichtung wenigstens einendseitig von einer äußeren Streckmetalllage begrenzt ist, dadurch gekennzeichnet, dass die äußere Streckmetalllage flächenhaft mit der Bipolarplatte stoffschlüssig verbunden ist.

Durch die erfindungsgemäße stoffschlüssige Verbindung von Bipolarplatte und Gasdiffusionselektrode werden die aus dem Stand der Technik bekannten Nachteile vollständig behoben. Zum einen wird eine relative Bewegung zwischen Bipolarplatte und Elektrode verhindert, wodurch negative Setzungserscheinungen in vorteilhafter Weise ausgeschlossen sind. Ferner können sich im Bereich der stoffschlüssigen Verbindung bei bestimmungsgemäßem Gebrauch keine den Elektronentransport an der Grenzschicht zwischen Bipolarplatte und Elektrode beeinträchtigenden Oxide bilden. Dies insbesondere deshalb, da durch die stoffschlüssige Verbindung, welche insbesondere als Schweißverbindung ausgebildet ist, eine elektrisch leitende Materialbrücke zwischen Bipolarplatte und Elektrode gebildet wird, welche nicht im Wirkkontakt mit den Reaktionsgasen stehen. Ortsfeste Positionierung und Ladungstransport können mit der erfindungsgemäßen Ausgestaltung auch nach hoher Betriebsdauer im Wesentlichen unverändert erreicht werden. Die erfindungsgemäße Ausgestaltung ist damit zumindest in diesem Bereich auch wartungsfrei.

"Stoffschlüssig" bezeichnet im Sinne der Erfindung in erster Linie eine Schweißverbindung, insbesondere ohne zusätzlichen Materialeintrag. Prinzipiell möglich ist im technischen Sinne jedoch auch die Ausgestaltung als Lötverbindung. Während Schweißverbindungen mechanisch stabiler sind, ist die Ausbildung von Lötverbindungen verfahrenstechnisch mit weniger Aufwand verbunden. Hinsichtlich des eingesetzten Schweißverfahrens existieren auch hier Abstufungen hinsichtlich des zu betreibenden Aufwands beim Herstellungsverfahren der Bipolarplatten-Elektrodenanordnung. Abhängig von der später im Detail beschriebenen konkreten Verfahrensführung bevorzugt sind Schmelzschweißverfahren und Widerstandsschweißverfahren.

Erfindungsgemäß weist die Elektrodenanordnung einen eine Gasdiffusionselektrode ausbildenden Stapel aus schichtweise angeordneten Streckmetalllagen auf. Dabei meint "Streckmetall" eine mit Öffnungen in der Oberfläche ausgebildete Metalltafel, wobei die Öffnungen, auch Maschen genannt, durch versetzte Schnitte ohne Materialverlust unter gleichzeitig streckender Verformung der Metalltafel entstehen. Mehrere Lagen Streckmetall bilden die erfindungsgemäße Gasdiffusionselektrode aus. Jeweils benachbarte Streckmetalllagen sind vorzugsweise miteinander verschweißt. Es ist so ein formstabiler Stapel aus einer Mehrzahl von Streckmetalllagen gegeben, wobei je nach späterem Verwendungszweck der Gasdiffusionselektrode vier, fünf, sechs oder noch mehr Streckmetalllagen vorgesehen sein können.

Die vorzugsweise durch Schweißen miteinander verbundenen Streckmetalllagen bilden in vorteilhafter Weise eine glatte, ebene und stabile Auflage für einerseits eine protonenleitende Membran einer Membran-Elektroden-Anordnung als auch für eine Bipolarplatte der erfindungsgemäßen Bipolarplatten-Elektrodenanordnung andererseits. Diese Bipolarplatte befindet sich im endmontierten Zustand der Bipolarplatten-Elektrodenanordnung zwischen zwei Gasdiffusionselektroden.

Benachbarte Streckmetalllagen sind vorzugsweise in Kontaktpunkten ihrer einander zugewandten Flachseiten mittels Widerstandsschweißen flächenhaft miteinander verbunden. "Flächenhaft" im Sinne der Erfindung meint dabei aufgrund der Gitterausgestaltung der Streckmetalllagen nicht vollflächig. Es findet aber im Sinne einer flächenhaften Ausgestaltung eine Verbindung in den Kontaktpunkten zweier benachbarten Streckmetalllagen statt, die sich infolge der Gitterausgestaltung der Streckmetalllagen regelmäßig über die gesamten einander zugewandten Flachseiten der Streckmetalllagen erstrecken. Es wird insofern nicht nur eine punktförmige Verbindung erreicht, sondern vielmehr eine solche, die insoweit flächenhaft ist, als dass sich in regelmäßiger Ausgestaltung eine Vielzahl von Kontaktpunkten über die gesamte Oberfläche der einander in Kontakt stehenden Flachseite benachbarter Streckmetalllagen ausbilden. Es wird so in vorteilhafter Weise ein sehr formstabiler Verbund an Streckmetalllagen bereitgestellt.

Die einzelnen Streckmetalllagen verfügen herstellungsbedingt über eine plastische Höhe, die größer ist, als die Blechdicke der als Ausgangsmaterial gewählten Metalltafeln. Diese plastische Höhe verleiht dem Streckmetall gewisse Federeigenschaften, die in vorteilhafter Weise bei einem Verbinden der Streckmetalllagen mittels Widerstandsschweißen erhalten bleibt. Die endfertig miteinander zu einem Stapel miteinander verschweißten Streckmetalllagen besitzen somit definierte Federeigenschaften, die sich anhand der Federkennlinien der einzelnen Streckmetalllagen berechnen und reproduzierbar ausbilden lassen. Es ist deshalb in vorteilhafterweise möglich, aufgrund der konstruktiven Ausgestaltung nach der Erfindung gezielt Einfluss auf die spätere Kontaktkraft zwischen Gasdiffusionselektrode einerseits und daran anliegender Membran andererseits mit dem Ziel Einfluss zu nehmen, dass ein dauerhaft vollflächiges und sicheres Anliegen der Membran an der oder den zugeordneten Gasdiffusionselektroden sichergestellt ist.

Eine "Bipolarplatte" im Sinne der Erfindung bezeichnet eine Platte aus einem metallischen Material, wie vorzugsweise Titan, mit definierten Abmessungen. Titan ist aufgrund seiner vorteilhaften Korrosionsbeständigkeit, seiner vorteilhaften mechanischen Stabilität und elektrischen Leitfähigkeit bei gleichzeitigem geringem Gewicht besonders bevorzugt. Erfindungsgemäß bezeichnet der Begriff "Platte" ein in der Ebene ausgebreitetes Bauteil, das aus biegesteifem Material besteht und durch senkrecht auf sie wirkende Kräfte und durch Momente um Achsen belastet wird, die in der Plattenebene liegen. Unabhängig von ihrer sonstigen geometrischen Beschaffenheit, weist sie stets zwei einander gegenüberliegend ausgebildete große Flächen, die sich zweidimensional entlang der Plattenebene erstrecken. Die Platte ist insbesondere quaderförmig ausgebildet. Sie weist dabei zwei einander gegenüberliegend ausgebildete große Flächen und vier, die beiden großen Flächen umfangstechnisch miteinander verbindende kleine Flächen auf.

Im endfertigen Zustand der Bipolarplatten-Elektrodenanordnung ist die äußere Streckmetalllage stets Teil der Gasdiffusionselektrode. Die Gasdiffusionselektrode wird daher in diesem Fall vom gesamten Stapel gebildet. Fertigungstechnisch muss in dieser Hinsicht jedoch differenziert werden. So kann es sein, dass zunächst die Elektrode endfertig hergestellt und anschließend die Bipolarplatte mit der Elektrode verbunden wird. Andererseits ist es auch möglich, zunächst die Bipolarplatte mit der späteren äußeren Streckmetalllage zu verbinden und anschließend den Verbund aus Bipolarplatte und Streckmetalllage mit einem eine Gasdiffusionselektrode bildenden vorgefertigten Stapel aus Streckmetalllagen zu verbinden. In diesem Fall wird der Stapel, der bereits zuvor eine Gasdiffusionselektrode gebildet hat, um eine weitere Streckmetalllage ergänzt. Gleichwohl ist die nachträglich ergänzte und nunmehr äußere Streckmetalllage in der fertigen Bipolarplatten-Elektrodenanordnung technisch betrachtet Teil der Gasdiffusionselektrode.

Ferner ist es bevorzugt, wenigstens die äußere Streckmetalllage, vorzugsweise jedoch alle Streckmetalllagen des Stapels, aus Titan auszubilden. Titan ist aufgrund seiner vorteilhaften Korrosionsbeständigkeit, seiner vorteilhaften mechanischen Stabilität und elektrischen Leitfähigkeit bei gleichzeitigem geringem Gewicht nicht nur für die Bipolarplatte, sondern auch für die Streckmetalllagen besonders vorteilhaft. Darüber hinaus weist Titan in seiner Ausgestaltung als Streckmetalllage für die spätere Brennstoffzelle oder Elektrolysevorrichtung vorteilhafte federelastische Eigenschaften in Richtung der Flächennormalen auf.

Vorzugsweise weist wenigstens die äußere Streckmetalllage eine Gitterstruktur auf, wobei die Gitterstruktur aus sich kreuzenden Stegen besteht, die einzelne Maschen einerseits und Kreuzungspunkte andererseits bilden, wobei die flächige Außenseite von einer Vielzahl von in einer gemeinsamen Ebene angeordneter Kreuzungspunkte gebildet ist, wobei stoffschlüssige Verbindungsstellen zwischen jeweils einem Kreuzungspunkt und einem korrespondierenden Kontaktpunkt der Bipolarplatte ausgebildet sind. Auch hierunter ist zuvor mit Bezug auf die Verbindung einzelner Streckmetalllagen untereinander beschriebene "flächenhafte" Verbindung zu verstehen.

Gemäß einem bevorzugten Merkmal der Erfindung ist vorgesehen, dass wenigstens ein Teil der Streckmetalllagen des Stapels voneinander verschiedene Maschenweiten aufweist. Je Streckmetalllage ist eine bestimmte Maschenweite vorgesehen. Diese Maschenweite kann von Streckmetalllage zu Streckmetalllage variieren. Diese Ausgestaltung ist insbesondere in zweierlei Hinsicht von Vorteil. Die wünschenswerterweise im bestimmungsgemäßen Verwendungsfall zu erreichende turbulente Fluiddurchströmung wird so unterstützt. Ferner kommt es zu einer verungleichmäßigten Verteilung der sich zwischen den einzelnen Streckmetalllagen ausbildenden Kontaktpunkten, was die Formstabilität des späteren Verbundes zusätzlich fördert.

Es ist gemäß einem weiteren Merkmal der Erfindung vorgesehen, dass die Maschen der an der Bipolarplatte der Bipolarplatten-Elektrodenanordnung anliegenden äußeren Streckmetalllage die größte Maschenweite aufweist. Dabei sind die Streckmetalllagen vorzugsweise derart im Stapel aufeinander folgend angeordnet, dass die Maschenweite der Streckmetalllagen ausgehend von der mit der Bipolarplatte verbundenen äußeren Streckmetalllage in Stapelrichtung abnimmt. Die Aufgabe der gröberen Streckmetalle ist es dabei, einerseits eine stabile und ebene Fläche auszubilden, andererseits aber auch eine gewisse Federwirkung aufzubauen. Vorzugsweise ist mithin vorgesehen, dass die im bestimmungsgemäßen Anwendungsfall mit der Bipolarplatte der Bipolarplatten-Elektrodenanordnung in Kontakt kommende äußere Streckmetalllage die größte Maschenweite aller Streckmetalllagen der Bipolarplatten-Elektrodenanordnung aufweist. Es wird so sichergestellt, dass die mit der Bipolarplatte verbundene äußere Streckmetalllage besonders große federelastische Eigenschaften aufweist. Dies ist sowohl für das Herstellungsverfahren als auch für die spätere Brennstoffzelle oder die Elektrolysevorrichtung von Vorteil. Vorzugsweise weist die äußere Streckmetalllage eine regelmäßige Maschenweite auf. Insbesondere wird die bevorzugte Maschenweite der äußeren Streckmetalllage aus einer Maschenbreite von 10 bis 15 mm, insbesondere 12 mm, und einer Maschenlänge von 4 bis 8 mm, insbesondere 6 mm, gebildet.

Gemäß der Erfindung kann die äußere Streckmetalllage einteilig oder wenigstens zweiteilig, insbesondere mehrteilig ausgebildet sein. Die einteilige Ausgestaltung ist eine typische einstückig ausgebildete Streckmetalllage. Bei der zwei- oder mehrteiligen Ausgestaltung gliedert sich die Streckmetalllage in eine bestimmte Zahl von Streckmetallelementen. Diese Streckmetallelemente sind jedoch derartig untereinander stoffschlüssig verbunden, dass im Ergebnis eine zusammenhängende Streckmetalllage ausgebildet wird. Die Ausbildung einer Streckmetalllage aus mehreren Streckmetallelementen hat Vorteile mit Bezug auf das gewählte Herstellungsverfahren, da hierdurch eine Vereinfachung des konkreten Verfahrens durch Anwendung bestimmter vorteilhafter Schweißverfahren ermöglicht wird. Vorzugsweise weist die äußere Streckmetalllage dabei zwei- oder mehr Streckmetallelemente auf, von denen ein Element als Rahmen und die übrigen Elemente als Einsätze, insbesondere Metalleinsatz, bevorzugt ein Einsatz aus Streckmetall oder einem Drahtgewebe, ausgebildet sind. Hierbei ist es bevorzugt, dass die äußere Streckmetalllage ausschließlich im Bereich des Einsatzes mit der Bipolarplatte stoffschlüssig verbunden, insbesondere verschweißt ist. Hierdurch wird bei gleichzeitiger Lösung der der Erfindung zugrunde liegenden Aufgabe zusätzlich das Herstellungsverfahren vereinfacht.

Die Erfindung betrifft ferner ein Verfahren zur Herstellung einer erfindungsgemäßen Bipolarplatten-Elektrodenanordnung einer Brennstoffzelle oder einer erfindungsgemäßen Elektrolysevorrichtung, bei dem
- ein Stapel aus schichtweise angeordneten Streckmetalllagen, eine Bipolarplatte und eine zusätzliche Streckmetalllage bereitgestellt werden;
- aus der zusätzlichen Streckmetalllage wenigstens ein mehrere Maschen umfassender flächiger Abschnitt vollständig entfernt wird, wobei aus der zusätzlichen Streckmetalllage wenigstens ein erstes Streckmetallelement in Form des entfernten Abschnitts und ein zweites Streckmetallelement in Form der verbleibenden Streckmetalllage mit einem zum entfernten Abschnitt korrespondierenden Durchgangsloch gebildet wird;
- das zweite Streckmetallelement auf eine äußere Streckmetalllage des Stapels mittels Widerstandsschweißen aufgeschweißt wird,
- das erste Streckmetallelement anschließend wieder in das Durchgangsloch des zweiten Streckmetallelements eingesetzt wird,
- die Bipolarplatte auf die dem Stapel abgewandte flächige Seite des ersten Streckmetallelements mittels Widerstandsbuckelschweißen aufgeschweißt wird, wobei, vorzugsweise in einem Schritt, die Bipolarplatte und das erste Streckmetallelement verschweißt werden und wobei das erste Streckmetallelement und das zweite Streckmetallelement verschweißt werden.

Das erfindungsgemäße Verfahren dient der Herstellung der erfindungsgemäßen Bipolarplatten-Elektrodenanordnung. Der verfahrenstechnische Vorteil liegt darin, dass alle Komponenten der Anordnung mittels Widerstandsschweißen miteinander stoffschlüssig verbunden werden können. Widerstandsschweißverfahren sind insbesondere steuerungstechnisch vergleichsweise einfach und benötigen insbesondere im Vergleich zu anderen Schweißverfahren Schweißwerkzeuge niederer Komplexität. Aufgrund der Beschaffenheit der Bipolarplatte ist eine direkte Verschweißung mit der Elektrode mittels Widerstandsschweißen nicht möglich. Über einige bewusst in das Verfahren integrierte innovative und synergetische Zwischenschritte kann dies durch das erfindungsgemäße Verfahren gleichwohl ermöglicht werden. Der Verfahrensführung liegt die Erkenntnis zugrunde, dass Streckmetalllagen, insbesondere mit größerer Maschenweite, bei der Verschweißung in Flächenrichtung gestreckt werden. Die plastische Höhe einer verschweißten Streckmetalllage ist daher geringer als die plastische Höhe einer identischen unverschweißten Streckmetalllage. Werden wie mit der Erfindung vorgesehen, aus einer unverschweißten Streckmetalllage (zusätzliche Streckmetalllage) einzelne Elemente (erstes Streckmetallelement) zunächst entfernt und anschließend wieder in die nunmehr mit einer Streckmetalllage des Stapels verschweißte verbleibende Streckmetalllage (zweites Streckmetallelement) eingesetzt, so weist das verschweißte zweite Streckmetallelement eine geringere plastische Höhe auf, als das zuvor entfernte erste Streckmetallelement. Bei bestimmungsgemäßem Einsatz des ersten Streckmetallelements in das zweite Streckmetallelement überragt das erste Streckmetallelement daher das zweite Streckmetallelement in Dickenrichtung bzw. Stapelrichtung des Stapels. Der besondere Clou der Erfindung liegt nun darin, dass der überstehende Teil des ersten Streckmetallelements als Schweißbuckel in einem Widerstandsbuckelschweißverfahren bei der Verschweißung von Bipolarplatte und äußerer Streckmetalllage genutzt werden kann. Dabei wird der Schweißbuckel in Form des überstehenden Teils nahezu vollständig abgeschmolzen. Im Bereich des ersten Streckmetallelements besteht daher zwischen Bipolarplatte und äußerer Streckmetalllage eine stoffschlüssige Verbindung. Im Bereich des zweiten Streckmetallelements kann mit der Bipolarplatte im späteren Verlauf eine Kontaktierung mittels der aus dem Stand der Technik bekannten Verpressung hergestellt werden. Zudem ist vorgesehen, dass bei diesem Schweißschritt die einzelnen Streckmetallelemente zu einer weitgehend einheitlichen äußeren Streckmetalllage verschweißt werden. Die zuvor voneinander getrennten Elemente werden also im Ergebnis wieder zu einer Streckmetalllage zusammengefügt.

Demgegenüber besteht im Bereich des zweiten Streckmetallelements zwischen äußerer Streckmetalllage und der benachbarten Streckmetalllage der Gasdiffusionselektrode eine stoffschlüssige Verbindung. Mithin besteht eine stoffschlüssige Leitungsbrücke zwischen Bipolarplatte und Gasdiffusionselektrode über das erste Streckmetallelement zum zweiten Streckmetallelement hin zur im Stapel benachbarten Streckmetalllage.

Vorzugsweise ist zur Bildung des ersten Streckmetallelements vorgesehen, dass der Abschnitt aus der zusätzlichen Streckmetalllage mittels eines Schneidprozesses, insbesondere Laserschneiden, entfernt wird. Insbesondere Laserschneiden lässt sich verfahrenstechnisch hervorragend automatisieren und ist hochpräzise.

Vorzugsweise ist vorgesehen, dass das zweite Streckmetallelement auf diejenige Streckmetalllage der Gasdiffusionselektrode oder des Stapels aus Streckmetalllagen aufgeschweißt wird, die innerhalb der Gasdiffusionselektrode oder des Stapels aus Streckmetalllagen die größte Maschenweite aufweist, wobei das zweite Streckmetallelement eine größere Maschenweite aufweist, als die Streckmetalllage der Gasdiffusionselektrode auf die sie aufgeschweißt wird. Es wird so sichergestellt, dass die mit der Bipolarplatte verbundene äußere Streckmetalllage besonders große federelastische Eigenschaften aufweist.

Gemäß einem bevorzugten Merkmal der Erfindung ist vorgesehen, dass das erste Streckmetallelement derart in das zweite Streckmetallelement eingesetzt wird, dass seine relative Ausrichtung zum zweiten Streckmetallelement derjenigen Ausrichtung vor seiner Entfernung entspricht. Hierdurch wird insbesondere die mechanischen Eigenschaften, wie insbesondere Federelastik und Stabilität, der resultierenden Streckmetalllage durch Nutzung der ursprünglichen Verbindungsstellen nahezu verlustfrei wiedergewonnen. Prinzipiell ist jedoch auch denkbar, dass eine von der ursprünglichen Ausrichtung abweichende Ausrichtung des ersten Streckmetallelements eingestellt wird. Hierdurch lassen sich innerhalb einer Streckmetalllage gegeneinander abschnittsweise verdreht ausgerichtete Maschen ausbilden. Hierdurch lässt sich insbesondere die Ausbildung einer laminaren Strömung des die Elektrodenanordnung passierenden Fluids in vorteilhafter Weise vermeiden.

Eine bevorzugte Weiterbildung des erfindungsgemäßen Verfahrens sieht vor, nicht nur ein einzelner Abschnitt aus der zusätzlich bereitgestellten Streckmetalllage entfernt wird, sondern eine Mehrzahl solcher, insbesondere gleichartiger, Abschnitte. Besonders bevorzugt werden insgesamt vier Abschnitte aus der Streckmetalllage entfernt um hinterher wieder in das zweite mit einer entsprechenden Anzahl von Durchgangslöchern versehene zweite Streckmetallelement nach dessen Verschweißung eingesetzt zu werden. Vorzugsweise werden die Abschnitte so gewählt, dass gleichmäßig über das zweite Streckmetallelement verteilt angeordnete Durchgangslöcher ausgebildet werden. Hierdurch werden für das spätere Widerstandsbuckelschweißen mehrere Schweißbuckel bereitgestellt. Hierdurch wird die Verbindungsfläche zwischen Bipolarplatte und äußerer Streckmetalllage erhöht und die Stabilität während des Schweißvorgangs durch entsprechend gleichmäßig verteilte Abstützflächen in Form der Buckel verbessert. Konkret ist vorgesehen, dass in Entsprechung des ersten Abschnitts, weitere Abschnitte zur Bildung weiterer Streckmetallelemente aus der zusätzlichen Streckmetalllage und/oder dem zweiten Streckmetallelement vor der Verschweißung des zweiten Streckmetallelements vollständig entfernt werden. Diese werden vorzugsweise wieder in das verschweißte zweite Streckmetallelement eingesetzt und anschließend, vorzugsweise gleichzeitig mit dem ersten Streckmetallelement, mit der Bipolarplatte einerseits und dem zweiten Streckmetallelement andererseits mittels Widerstandsbuckelschweißen verschweißt.

Zur Erfindung gehört auch ein abgewandeltes Verfahren zur Herstellung einer erfindungsgemäßen Bipolarplatten-Elektrodenanordnung einer Brennstoffzelle oder einer erfindungsgemäßen Elektrolysevorrichtung, bei dem
- ein Stapel aus schichtweise angeordneten Streckmetalllagen, eine Bipolarplatte und eine zusätzliche Streckmetalllage bereitgestellt werden;
- aus der zusätzlichen Streckmetalllage wenigstens ein mehrere Maschen umfassender flächiger Abschnitt vollständig entfernt wird, wobei aus der zusätzlichen Streckmetalllage wenigstens ein erstes Streckmetallelement in Form des entfernten Abschnitts und ein zweites Streckmetallelement in Form der verbleibenden Streckmetalllage mit einem zum entfernten Abschnitt korrespondierenden Durchgangsloch gebildet wird;
- das erste Streckmetallelement auf eine äußere Streckmetalllage des Stapels mittels Widerstandsschweißen aufgeschweißt wird,
- das zweite Streckmetallelement anschließend auf die äußere Streckmetalllage aufgesetzt wird, wobei das erste Streckmetallelement im Durchgangsloch des zweiten Streckmetallelements positioniert wird,
- die Bipolarplatte auf die dem Stapel abgewandte flächige Seite des zweiten Streckmetallelements mittels Widerstandsbuckelschweißen aufgeschweißt wird, wobei, vorzugsweise in einem Schritt, die Bipolarplatte und das zweite Streckmetallelement verschweißt werden und wobei das zweite Streckmetallelement und das erste Streckmetallelement verschweißt werden.

Sämtliche Vorteile des ersten erfindungsgemäßen Verfahrens sind auch mit diesem zweiten erfindungsgemäßen Verfahren erreichbar. Das zweite Verfahren unterscheidet sich lediglich in der Reihenfolge in der das erste und zweite Streckmetallelement eingesetzt werden vom ersten Verfahren. Auch kann das zweite Verfahren durch die bevorzugten Merkmale des ersten Verfahrens in vorteilhafter Weise weitergebildet werden. Beide Verfahren verbindet daher eine gemeinsame erfinderische Idee.

Zu der Erfindung gehört auch ein alternatives Verfahren zur Herstellung der erfindungsgemäßen Bipolarplatten-Elektrodenanordnung einer Brennstoffzelle oder einer erfindungsgemäßen Elektrolysevorrichtung bei dem
- ein Stapel aus schichtweise angeordneten Streckmetalllagen, eine Bipolarplatte und eine zusätzliche Streckmetalllage mit einer Vielzahl gleichmäßig über eine Flachseite verteilt angeordneter Kreuzungspunkte bereitgestellt werden;
- die Bipolarplatte mit einer Vielzahl von Durchgangslöchern versehen wird, wobei die Durchgangslöcher die Bipolarplatte vollständig durchgreifen und sich zwischen den beiden großen Flächen erstrecken.
- die Bipolarplatte und die zusätzliche Streckmetalllage miteinander in Kontakt gebracht werden, wobei jedes Durchgangsloch der Bipolarplatte über einem Kreuzungspunkt der Streckmetalllage positioniert wird;
- die Bipolarplatte und die zusätzliche Streckmetalllage mittels eines Schmelzschweißverfahrens zu einem Verbund flächenhaft miteinander verschweißt werden, wobei wenigstens eine Schweißelektrode in die Durchgangslöcher eingeführt wird und eine Schweißverbindung zwischen Bipolarplatte und Streckmetalllage im Bereich der Kreuzungspunkte ausgebildet wird;
- die verbundseitige Streckmetalllage des Stapels und die zusätzliche Streckmetalllage des Verbundes mittels Widerstandsschweißen miteinander flächenhaft verschweißt werden.

Durch die erfindungsgemäße alternative Verfahrensführung wird eine stoffschlüssige Verbindung zwischen der Gasdiffusionselektrode der Bipolarplatte mit dem besonderen Vorteil erreicht, dass Setzungserscheinungen und die Bildung von Oxiden an der Grenzschicht zwischen Elektrode und vermieden werden. Verfahrenstechnisch hat das Verfahren den Vorteil, dass die zusätzliche Streckmetalllage nicht in einzelne Elemente aufgetrennt werden muss. Dieser Teil des Verfahrens ist daher vorteilhafter Weise vereinfacht. Im Gegensatz zu dem ersten erfindungsgemäßen Verfahren kann die Verschweißung der zusätzlichen Streckmetalllage und der Bipolarplatte mangels eines Schweißbuckels nicht durch vergleichsweise einfaches Widerstandsbuckelschweißen erfolgen, sondern muss durch ein Schmelzschweißverfahren erfolgen. Hierzu ist insbesondere die Bipolarplatte vor der Verschweißung mit Durchgangslöcher zu versehen, um einen schweißtechnischen Zugang für die Schweißelektrode zu der Streckmetalllage zu schaffen.

Prinzipiell sind eine Vielzahl Schmelzschweißverfahren für den Einsatz in dem alternativen erfindungsgemäßen Verfahren geeignet. Als vorteilhaft hat sich jedoch Lichtbogenschutzgasschmelzschweißen, insbesondere Wolfram-Inertgas-Schweißen (WIG-Schweißen), erwiesen. WIG-Schweißen erfolgt unter Schutzgasatmosphäre mit Argon.

Die Bipolarplatte ist gemäß dem Verfahren mit Löchern ausgerüstet. Diese werden vorzugsweise mittels Laser in die vorzugsweise aus Titan gebildete Bipolarplatte eingebracht. In Ihrer geometrischen Größe und Ausrichtung korrespondieren die Löcher mit den Kreuzungspunkten der Maschen der an der Bipolarplatte anliegenden Streckmetalllage. Im Zuge des WIG-Schweißens werden die Löcher mit einem Hilfsstoff, insbesondere aus Titan, gefüllt. Dabei entsteht eine stoffschlüssige Verbindung zwischen der, insbesondere aus Titan gebildeten, Streckmetalllage einerseits und der insbesondere aus Titan gebildeten, Bipolarplatte andererseits, mittels Einbringung von Titan als Hilfsstoff. Es wird so eine Metall-Metall-Verbindung (ohne Titanoxid) zwischen der Streckmetalllage und der Bipolarplatte geschaffen. Im Ergebnis ergibt sich, dass die Bipolarplatte dauerhaft an der Streckmetalllage stoffschlüssig fixiert ist, sodass Setzerscheinungen vermieden sind. Zudem wird eine Metall-Metall-Verbindung zwischen der Streckmetalllage und der Bipolarplatte geschaffen, wodurch ein minimierter ohmscher Widerstand entsteht. Im Ergebnis ist so der ohmsche Widerstand zwischen der Gasdiffusionselektrode und der Bipolarplatte verringert, und dies auch dauerhaft.

Die Erfindung betrifft ferner die Verwendung einer Bipolarplatten-Elektrodenanordnung auf der Anodenseite, mithin, eine Bipolarplatten-Anodenanordnung.

Auf der Kathodenseite der Bipolarplatte wird vorzugsweise eine Streckmetalllage aus Edelstahl angebracht. Die Verbindung zur Bipolarplatte erfolgt ebenfalls mittels Schweißen, und zwar mittels Widerstandsschweißen oder auch mittels Strahlschweißen, insbesondere Laserstrahlschweißen. Denkbar ist vor allem aber auch ein Löten, insbesondere ein Laserlöten.

Mit Bezug auf die Erfindung ist im Besonderen diejenige Streckmetalllage des die Gasdiffusionselektrode bildenden Stapels von Bedeutung, die den Stapel bipolarplattenseitig abschließt. Dies insbesondere deshalb, da sie verbindungstechnisch das Bindeglied zwischen Elektrode und Bipolarplatte bildet. Diese Streckmetalllage wird im Sinne der Erfindung als "äußere" Streckmetalllage bezeichnet.

Die andernendseitig angeordnete äußere Streckmetalllage, die den die Elektrode bildenden Stapel membranseitig abschließt, ist für die vorliegende Erfindung jedoch ebenfalls von Bedeutung. Dies deshalb, da die nachteilige Bildung von Oxiden auch die Verbindung zwischen Membran und membranseitiger Streckmetalllage betrifft. Zur Erfindung gehört damit auch ein System aufweisend eine Membran und die erfindungsgemäße Bipolarplatten-Elektrodenanordnung. Es ist in dieser Hinsicht vorzugsweise vorgesehen, dass wenigstens die membranseitige Oberfläche der anderen äußeren Streckmetalllage mit einer elektrisch leitfähigen Beschichtung versehen ist. Die Beschichtung kann insbesondere eine Katalyse der an der Elektrode bestimmungsgemäß ablaufenden chemischen Reaktion bewirken, Korrosionsschutz für das Material der Streckmetalllagen bieten und/oder die elektrische Leitfähigkeit der Streckmetalllage verbessern. Auf diesem Wege können Wirkungsgrad und Beständigkeit der erfindungsgemäßen Elektrode verbessert werden. Gemäß einem bevorzugten Merkmal der Erfindung ist vorgesehen, dass die Beschichtung aus Gold, Silber, Palladium, Platin, Rhodium, Iridium, Rhenium, Ruthenium, Molybdän, Wolfram, Nickel oder einer Verbindung mit mindestens einem dieser Metalle gebildet ist. Alle vorgenannten Metalle haben in wenigstens einem der vorgenannten Bereiche Katalyse, Korrosionsschutz oder elektrische Leitfähigkeit besonders vorteilhafte Eigenschaften. Besonders bevorzugt ist die Beschichtung aus Iridium und/oder einer iridiumhaltigen Verbindung, insbesondere Iridiumoxid, gebildet. Es hat sich herausgestellt, dass Iridium und dessen Verbindungen, insbesondere Iridiumoxid, mit Bezug auf die bei einer Elektrolyse in einer Elektrolysevorrichtung, insbesondere der Wasserelektrolyse, ablaufenden Reaktionen besonders vorteilhaft ist und sowohl katalytische, anti-korrosive und leitfähigkeitsbezogene Verbesserungen erbringt.

Allerdings handelt es sich bei Iridium um ein vergleichsweise seltenes Element, dessen Fördermenge auf unabsehbare Zeit begrenzt ist. Es ist daher bevorzugt, dass ausschließlich die membranseitige äußere Streckmetalllage, insbesondere ausschließlich die dem Stapel abgewandte Oberfläche der membranseitigen äußeren Streckmetalllage, mit Iridium und/oder einer iridiumhaltigen Verbindung, insbesondere Iridiumoxid, beschichtet ist. Es hat sich mit Bezug auf den erfindungsgemäßen Stapel aus Streckmetalllagen gezeigt, dass eine Beschichtung der bestimmungsgemäß an der Membran anliegenden Streckmetalllage bzw. deren membranseitige Oberfläche mit Iridium oder einer iridiumhaltigen Verbindung ausreichend ist, um die damit verbundenen Vorteile zu realisieren. Gleichzeitig kann die erfindungsgemäße Elektrode ressourcenschonend hergestellt werden.

Gemäß einem bevorzugten Merkmal der Erfindung ist vorgesehen, dass der Stapel zumindest bereichsweise unbeschichtete Streckmetalllagen aufweist, wobei zur Bildung des Verbunds beschichtete und zumindest bereichsweise unbeschichtete Streckmetalllagen miteinander verschweißt und verpresst sind. Die vorzugsweise durch Schweißen miteinander verbundenen Streckmetalllagen bilden in vorteilhafter Weise eine glatte, ebene und stabile Auflage für die protonenleitende Membran. Diese Membran befindet sich im endmontierten Zustand der Brennstoffzelle oder der Elektrolysevorrichtung zwischen zwei Gasdiffusionselektroden, wobei die eine der beiden Gasdiffusionselektroden im Falle beispielsweise der Wasserelektrolyse aus Titan (Sauerstoff-Seite) und die andere Gasdiffusionselektrode aus Edelstahl (Wasserstoff-Seite) gebildet ist.

Gemäß einem weiteren Merkmal der Erfindung ist vorgesehen, dass die bipolarplattenseitige äußere Streckmetalllage unbeschichtet ausgebildet ist.

Weitere Merkmale und Vorteile der Erfindung ergeben sich aus der nachfolgenden Beschreibung anhand der Figuren. Dabei betreffen die Fig. 1 bis Fig. 5 ein erstes erfindungsgemäßes Verfahren und die Fig. 1, Fig. 6 und Fig. 7 ein zweites alternatives erfindungsgemäßes Verfahren. Im Einzelnen zeigen:
- Fig. 1: in schematischer Darstellung eine Aufsicht und eine Seitenansicht auf eine erfindungsgemäße Streckmetalllage zur Verwendung in den erfindungsgemäßen Verfahren;
- Fig. 2: in schematischer vergrößerter Darstellung eine Aufsicht auf ein erstes Streckmetallelement und in schematischer Darstellung eine Aufsicht auf ein zweites Streckmetallelement gemäß einer ersten erfindungsgemäßen Verfahrensführung;
- Fig. 3: in schematischer, geschnittener Seitenansicht eine Darstellung eines Zwischenprodukts der ersten erfindungsgemäßen Verfahrensführung;
- Fig. 4: in schematischer, geschnittener Seitenansicht eine Darstellung eines Zwischenprodukts der ersten erfindungsgemäßen Verfahrensführung;
- Fig. 5: in schematischer, geschnittener Seitenansicht eine Darstellung der erfindungsgemäßen Bipolarplatten-Elektrodenanordnung gemäß der ersten erfindungsgemäßen Verfahrensführung;
- Fig. 6: in schematischer Darstellung eine Aufsicht und eine Seitenansicht auf eine erfindungsgemäße mit Durchgangslöchern versehene Bipolarplatte gemäß einer zweiten erfindungsgemäßen Verfahrensführung;
- Fig. 7: in schematischer Darstellung eine Aufsicht und eine Seitenansicht eines Zwischenprodukts der zweiten erfindungsgemäßen Verfahrensführung;

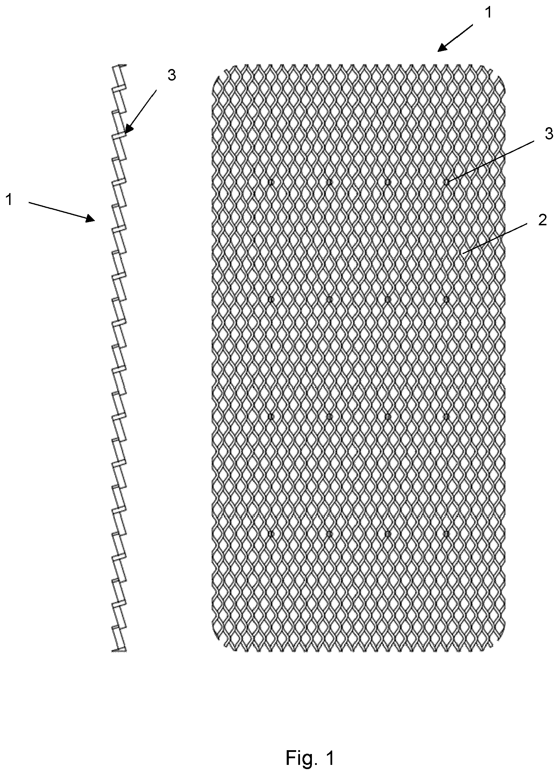

Figur 1 zeigt eine äußere bipolarplattenseitige Streckmetalllage 1 gemäß der Erfindung in Aufsicht und Seitenansicht.

Die Streckmetalllage 1 ist vorliegend aus Titan gebildet. Sie weist eine Gitterstruktur auf, welche aus sich kreuzenden Stegen besteht, die einzelne Maschen 2 einerseits und Kreuzungspunkte 3 andererseits bilden Die flächige Außenseite oder auch Flachseite der Streckmetalllage 1 wird von einer Vielzahl von in einer gemeinsamen Ebene angeordneter Kreuzungspunkte 3 gebildet ist. Exemplarisch sind in der Aufsicht von Figur 1 insgesamt 16 Kreuzungspunkte 3 mit jeweils einem Punkt markiert.

Vorliegend weist die Streckmetalllage 1 eine regelmäßige, für alle Maschen einheitliche, Maschenweite auf. Insbesondere wird die Maschenweite der Streckmetalllage aus einer Maschenbreite von 12 mm und einer Maschenlänge 6 mm gebildet. Mit Bezug auf die Zeichenebene wird die Maschenlänge zwischen zwei unmittelbar benachbarten Kreuzungspunkten 3 einer Masche 2 in horizontaler Richtung gemessen, während die Maschenbreite zwischen zwei unmittelbar benachbarten Kreuzungspunkten 3 einer Masche 2 in vertikaler Richtung gemessen wird.

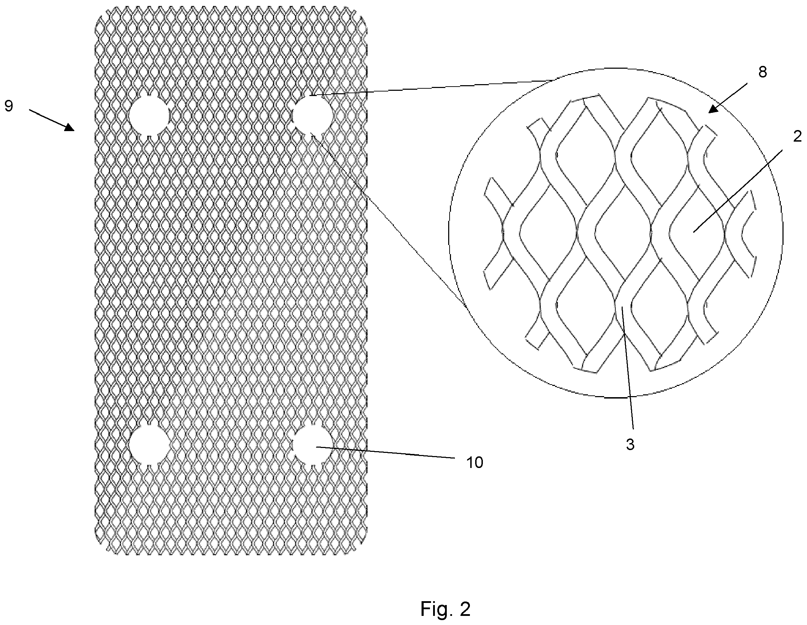

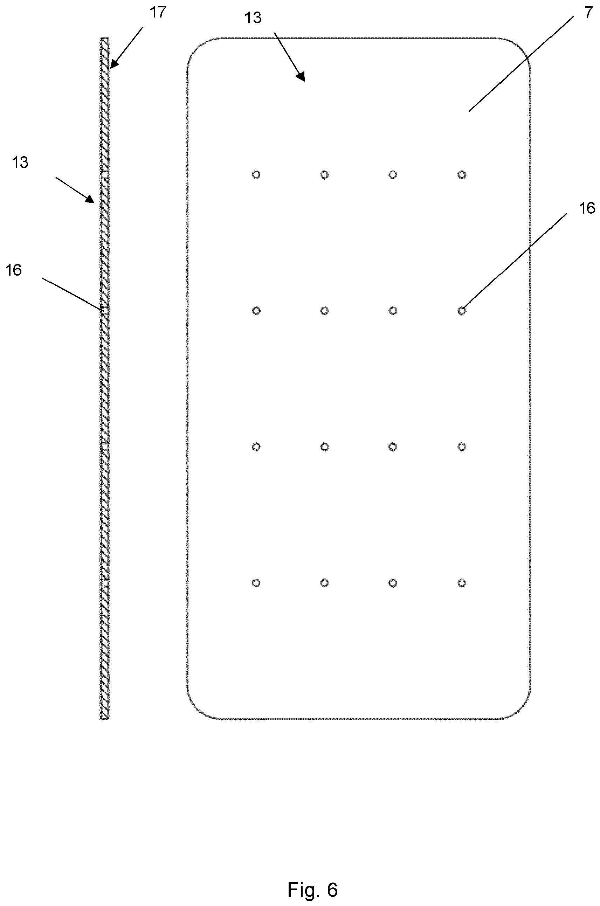

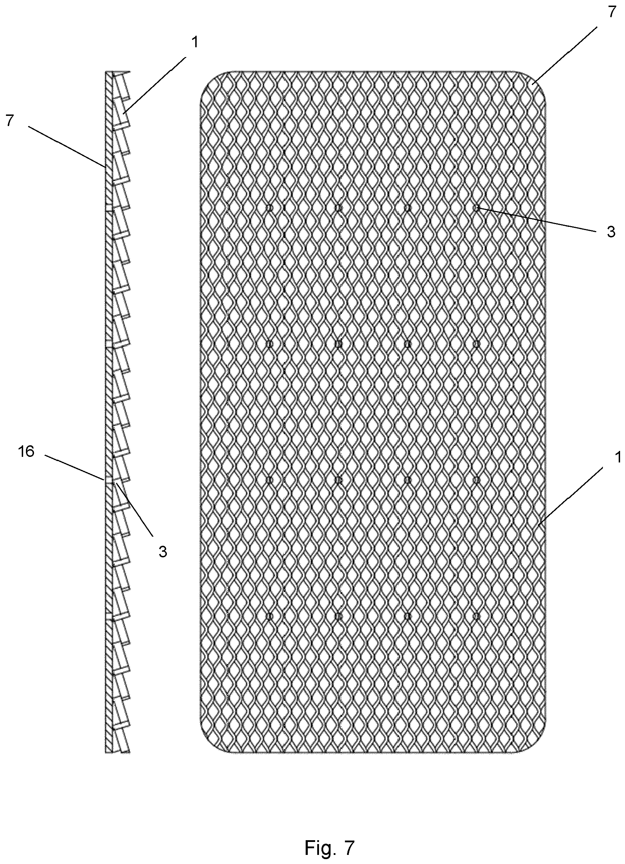

Die in Figur 1 dargestellte Streckmetalllage 1 wird sowohl in der ersten erfindungsgemäßen Verfahrensführung nach den Figuren 2 bis 5 als auch in der zweiten erfindungsgemäßen Verfahrensführung gemäß den Figuren 6 und 7 als zusätzliche Streckmetalllage verwendet.

Bestimmungsgemäß bildet sie im endfertigen Zustand in der vorliegenden oder modifizierten Form die äußere bipolarplattenseitige äußere Streckmetalllage.

Die Figuren 2 bis 5 zeigen unter Einbeziehung der in Figur 1 dargestellten Streckmetalllage 1 eine erste erfindungsgemäße Verfahrensführung.

Hierbei werden zunächst ein Stapel 11 aus schichtweise angeordneten Streckmetalllagen 4, 5, 6, eine Bipolarplatte 7 und eine zusätzliche Streckmetalllage in Form der Streckmetalllage 1 bereitgestellt.

Figur 2 zeigt nun, dass aus der Streckmetalllage 1 insgesamt vier identische, mehrere Maschen 2 umfassende flächige Abschnitte 7 vollständig entfernt werden. In Figur 2 ist nur ein Abschnitt 8 gezeigt. Die Abschnitte 8 werden vorliegend mittels eines Laserschneidverfahrens aus der Streckmetalllage 1 herausgeschnitten. Die Abschnitte 8 weisen vorliegend eine kreisförmige Kontur auf. Ergebnis der Entfernung der Abschnitte 8 sind vier erste Streckmetallelemente 8 in Form der entfernten Abschnitte 8 und ein zweites Streckmetallelement 9 in Form der verbleibenden Streckmetalllage 1 mit vier zu den entfernten Abschnitten 8 korrespondierenden kreisförmigen Durchgangslöchern 10.

In der Vergrößerung des Abschnitts 8 sind die Maschen 2 und die Kreuzungspunkte 3 gut zu erkennen.

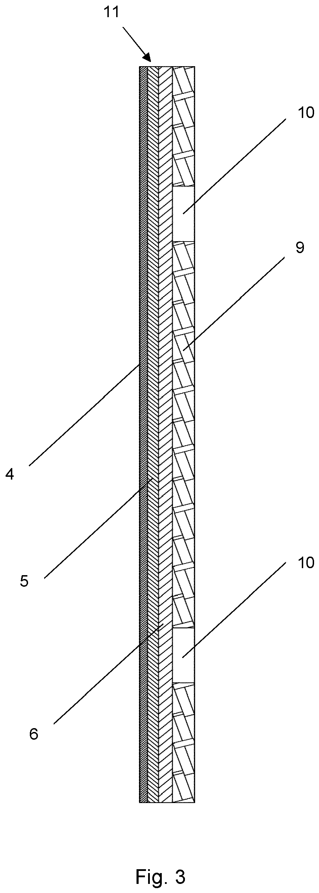

Anschließend wird, wie in Figur 3 dargestellt ist, das zweite Streckmetallelement 9 auf die ihm zugewandte Streckmetalllage 6 des Stapels 10 flächenhaft aufgeschweißt. Hierzu wird ein Widerstandsbuckelschweißverfahren eingesetzt. Das zweite Streckmetallelement 9 wird durch die Verschweißung dem Stapel 11 hinzugefügt und ist im endfertigen Zustand zusammen mit den ersten Streckmetallelementen in Form der äußeren Streckmetalllage 14 Teil der Gasdiffusionselektrode die im endfertigen Zustand vom gesamten Stapel 11 ausgebildet wird.

Durch die Verschweißung werden die Schweißbuckel in Form der Kreuzungspunkte des zweiten Streckmetallelements 9 zumindest teilweise abgeschmolzen. Die plastische Höhe des verschweißten Streckmetallelements 9 ist daher geringer als die plastische Höhe des unverschweißten Streckmetallelements 9 und auch als die plastische Höhe der unverschweißten ersten Streckmetallelemente 8.

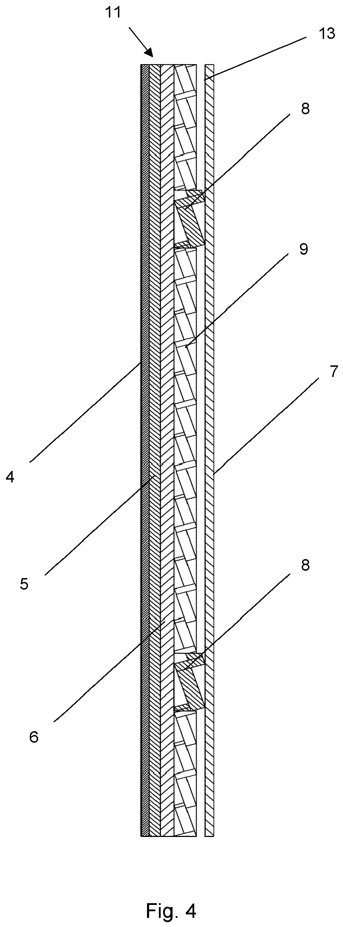

In Figur 4 ist eine nachfolgende Momentaufnahme des ersten Verfahrens dargestellt. Die ersten Streckmetallelemente 8 wurden wieder passgenau in die Durchgangslöcher 10 eingesetzt. Sie befinden sich dabei in Kontakt mit dem zweiten Streckmetallelement 9 und der Streckmetalllage 6 des Stapels 11. Ferner wurde bereits die Bipolarplatte 7 mit ihrer großen Fläche 13 in Kontakt mit den ersten Streckmetallelementen 8 gebracht.

Wie zu erkennen ist, überragend die unverschweißten ersten Streckmetallelemente 8 das zweiten Streckmetallelement 9 in Dickenrichtung, welche vorliegend der Stapelrichtung des Stapels 11 entspricht. Die Bipolarplatte 7 liegt damit ausschließlich an den Kreuzungspunkten 3 der ersten Streckmetallelemente 8 an. Ein Kontakt zwischen dem zweiten Streckmetallelement 9 und der Bipolarplatte 7 besteht zu diesem Zeitpunkt nicht. Die Bipolarplatte ist vorliegend aus Titan gebildet.

Im nachfolgenden Schritt können die in diesem Verfahrensstadium überstehenden ersten Streckmetallelemente 8 als Schweißbuckel genutzt werden und ermöglichen dadurch den Einsatz des nachfolgenden Widerstandsbuckelschweißens bei der Verschweißung von Bipolarplatte 7 und äußerer Streckmetalllage 14 genutzt werden kann. Dabei wird der Schweißbuckel in Form des überstehenden Teils der ersten Streckmetallelemente 8 nahezu vollständig abgeschmolzen. Im Bereich der ersten Streckmetallelemente besteht daher zwischen Bipolarplatte und äußerer Streckmetalllage eine stoffschlüssige Verbindung. Im Bereich des zweiten Streckmetallelements 9 kann mit der Bipolarplatte 7 während des Schweißschritts oder im späteren Verlauf eine Kontaktierung mittels Verpressung hergestellt werden. Zudem ist vorgesehen, dass bei diesem Schweißschritt die einzelnen Streckmetallelemente 8, 9 zu einer weitgehend einheitlichen äußeren Streckmetalllage 14 verschweißt werden. Die zuvor voneinander getrennten Elemente 8, 9 werden also im Ergebnis wieder zu einer mehrteiligen, aber stoffschlüssig verbundenen Streckmetalllage 14 zusammengefügt.

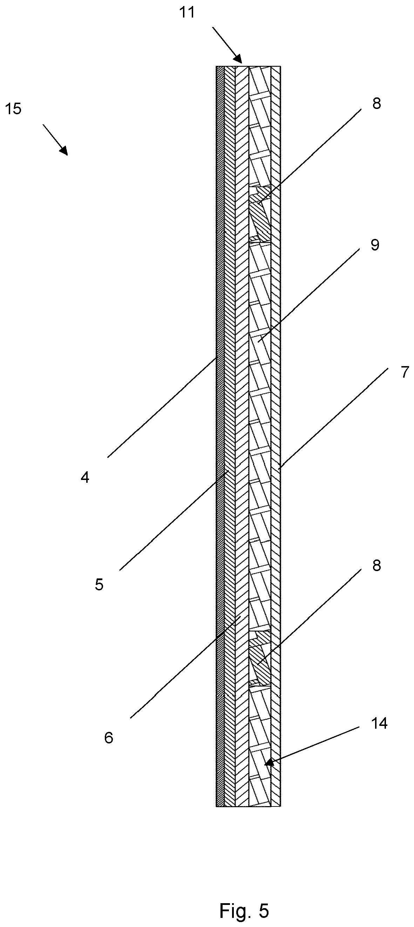

Figur 5 zeigt eine erfindungsgemäße Bipolarplatten-Elektrodenanordnung 15 hergestellt nach der ersten erfindungsgemäßen Verfahrensführung.

Zu erkennen ist Bipolarplatten-Elektrodenanordnung 15. Sie umfasst den die Elektrode ausbildenden Stapel 11 aus schichtweise angeordneten Streckmetalllagen 4, 5, 6, 14 und die mit der bipolarplattenseitigen äußeren Streckmetalllage 14 flächenhaft verschweißte Bipolarplatte 7. Zu erkennen ist, dass die Kreuzungspunkte 3 der ersten Streckmetallelemente 8, welche mit der Bipolarplatte 7 verschweißt sind, abgeschmolzen sind. Dadurch ist sind die stoffschlüssigen Verbindungsbereiche zwischen Streckmetalllage 14 und Bipolarplatte 7 in vorteilhafter Weise vergrößert.

Vorliegend ist durch die unterschiedliche Schraffierung dargestellt, dass die Streckmetalllagen 4, 5, 6, 14 des Stapels 11 voneinander verschiedene Maschenweiten aufweisen. Je Streckmetalllage ist eine bestimmte Maschenweite vorgesehen. Diese Maschenweite variiert von Streckmetalllage zu Streckmetalllage. Diese Ausgestaltung ist insbesondere in zweierlei Hinsicht von Vorteil. Die wünschenswerterweise im bestimmungsgemäßen Verwendungsfall zu erreichende turbulente Fluiddurchströmung wird so unterstützt. Ferner kommt es zu einer verungleichmäßigten Verteilung der sich zwischen den einzelnen Streckmetalllagen 4, 5, 6, 14 ausbildenden Kontaktpunkten, was die Formstabilität des späteren Stapels zusätzlich fördert.

Es ist dabei vorgesehen, dass die Maschen 2 der an der Bipolarplatte 7 der Bipolarplatten-Elektrodenanordnung 15 anliegenden äußeren Streckmetalllage 14 die größte Maschenweite aufweist. Dabei sind die Streckmetalllagen 4, 5, 6, 14 vorzugsweise derart im Stapel aufeinander folgend angeordnet, dass die Maschenweite der Streckmetalllagen 4, 5, 6, 14 ausgehend von der mit der Bipolarplatte 7 verbundenen äußeren Streckmetalllage 14 in Stapelrichtung abnimmt. Die Aufgabe der gröberen Streckmetalle ist es dabei, einerseits eine stabile und ebene Fläche auszubilden, andererseits aber auch eine gewisse Federwirkung aufzubauen. Vorzugsweise ist mithin vorgesehen, dass die im bestimmungsgemäßen Anwendungsfall mit der Bipolarplatte 7 der Bipolarplatten-Elektrodenanordnung 15 in Kontakt kommende äußere Streckmetalllage 14 die größte Maschenweite aller Streckmetalllagen 4, 5, 6, 14 der Bipolarplatten-Elektrodenanordnung 15 aufweist. Es wird so sichergestellt, dass die mit der Bipolarplatte 7 verbundene äußere Streckmetalllage 14 besonders große federelastische Eigenschaften aufweist. Dies ist sowohl für das Herstellungsverfahren als auch für die spätere Brennstoffzelle oder die Elektrolysevorrichtung von Vorteil.

Die Figuren 6 und 7 zeigen unter Einbeziehung der in Figur 1 dargestellten Streckmetalllage 1 eine zweite erfindungsgemäße Verfahrensführung.

Hierbei werden zunächst ein Stapel 11 aus schichtweise angeordneten Streckmetalllagen 4, 5, 6, eine Bipolarplatte 7 und eine zusätzliche Streckmetalllage in Form der Streckmetalllage 1 bereitgestellt.

Die Streckmetalllage 1 weist eine Vielzahl von gleichmäßig über eine Flachseite verteilt angeordneter Kreuzungspunkten 3 auf. Die Flachseite ist mit Bezug auf die Zeichenebene in Figur 1, diejenige flächige Seite, die in der Aufsicht oben liegt.

Wie in Figur 6 dargestellt ist, wird die Bipolarplatte 7 zunächst mit einer Vielzahl von Durchgangslöchern 16 versehen. Die Durchgangslöcher 16 durchgreifen die Bipolarplatte 7 vollständig und erstrecken sich zwischen ihren beiden großen Flächen 13, 17.

Die Durchgangslöcher 16 werden mittels Laser in die aus Titan gebildete Bipolarplatte 7 eingebracht. In Ihrer geometrischen Größe und Ausrichtung korrespondieren die Durchgangslöcher 16 mit den Kreuzungspunkten 3 der Maschen der an der Bipolarplatte 7 anliegenden Streckmetalllage 1. In Übereinstimmung mit den in Figur 1 markierten insgesamt 16 Kreuzungspunkten 3 sind in der Bipolarplatte 7 ebenfalls 16 korrespondierende Durchgangslöcher 16 ausgebildet.

Figur 7 zeigt, dass die Bipolarplatte 7 und die Streckmetalllage 1 miteinander in Kontakt gebracht werden. Dabei wird jedes Durchgangsloch 16 der Bipolarplatte 7 über einem korrespondierenden Kreuzungspunkt 3 der Streckmetalllage 1 positioniert;

Nicht dargestellt sind die folgenden Verfahrensschritte. Dabei wird die Bipolarplatte 7 und die Streckmetalllage 1 anschließend mittels WIG-Schweißen unter Schutzgasatmosphäre mit Argon zu einem Verbund flächenhaft miteinander verschweißt. Dabei wird wenigstens eine Schweißelektrode in die Durchgangslöcher 16 eingeführt wird und eine Schweißverbindung unter Hinzufügung eines Hilfsstoffs aus Titan zwischen Bipolarplatte 7 und Streckmetalllage 1 im Bereich der Kreuzungspunkte 3 ausgebildet.

Im Zuge des WIG-Schweißens werden die Löcher mit einem Hilfsstoff aus Titan gefüllt. Dabei entsteht eine stoffschlüssige Verbindung zwischen der aus Titan gebildeten Streckmetalllage 1 einerseits und der aus Titan gebildeten Bipolarplatte 7 andererseits. Es wird so eine Metall-Metall-Verbindung zwischen der Streckmetalllage 1 und der Bipolarplatte 7 geschaffen. Im Ergebnis ergibt sich, dass die Bipolarplatte 7 dauerhaft an der Streckmetalllage 1 stoffschlüssig fixiert ist, so dass Setzerscheinungen vermieden sind. Zudem wird eine Metall-Metall-Verbindung zwischen der Streckmetalllage 1 und der Bipolarplatte 7 geschaffen, wodurch ein minimierter ohmscher Widerstand entsteht. Im Ergebnis ist so der ohmsche Widerstand zwischen der Gasdiffusionselektrode und der Bipolarplatte 7 dauerhaft verringert.

Anschließend wird zur Bildung der erfindungsgemäßen Bipolarplatten-Elektrodenanordnung die verbundseitige Streckmetalllage 6 des Stapels 11 aus schichtweise angeordneten Streckmetalllagen 4, 5, 6 und die Streckmetalllage 1 des Verbundes mittels Widerstandsschweißen miteinander flächenhaft verschweißt.

### Bezugszeichen

- 1: Streckmetalllage
- 2: Masche
- 3: Kreuzungspunkt
- 4: Streckmetalllage
- 5: Streckmetalllage
- 6: Streckmetalllage
- 7: Bipolarplatte
- 8: erstes Streckmetallelement/Abschnitt
- 9: zweites Streckmetallelement
- 10: Durchgangsloch
- 11: Stapel
- 13: große Fläche
- 14: äußere Streckmetalllage
- 15: Bipolarplatten-Elektrodenanordnung
- 16: Durchgangsloch
- 17: große Fläche

## Patentansprüche

1. Bipolarplatten-Elektrodenanordnung einer Brennstoffzelle oder einer Elektrolysevorrichtung, aufweisend einen eine Gasdiffusionselektrode ausbildenden Stapel aus schichtweise angeordneten Streckmetalllagen und eine Bipolarplatte, wobei der Stapel in Stapelrichtung wenigstens einendseitig von einer äußeren Streckmetalllage begrenzt ist, **dadurch gekennzeichnet, dass** die äußere Streckmetalllage flächenhaft mit der Bipolarplatte stoffschlüssig verbunden ist.

2. Bipolarplatten-Elektrodenanordnung nach Anspruch 1, **dadurch gekennzeichnet, dass** wenigstens die äußere Streckmetalllage aus Titan gebildet ist.

3. Bipolarplatten-Elektrodenanordnung nach Anspruch 1 oder 2, **dadurch gekennzeichnet, dass** wenigstens die äußere Streckmetalllage eine Gitterstruktur aufweist, wobei die Gitterstruktur aus sich kreuzenden Stegen besteht, die einzelne Maschen einerseits und Kreuzungspunkte andererseits bilden, wobei die flächige Außenseite von einer Vielzahl von in einer gemeinsamen Ebene angeordneter Kreuzungspunkte gebildet ist, wobei stoffschlüssige Verbindungsstellen zwischen jeweils einem Kreuzungspunkt und einem korrespondierenden Kontaktpunkt der Bipolarplatte ausgebildet sind.

4. Bipolarplatten-Elektrodenanordnung nach einem der vorhergehenden Ansprüche, **dadurch gekennzeichnet, dass** wenigstens ein Teil der Streckmetalllagen des Stapels von einander verschiedene Maschenweiten aufweist, wobei die Streckmetalllagen derart im Stapel aufeinander folgend angeordnet sind, dass die Maschenweite der Streckmetalllagen ausgehend von der mit der Bipolarplatte verbundenen äußeren Streckmetalllage in Stapelrichtung abnimmt.

5. Bipolarplatten-Elektrodenanordnung nach Ansprüche 3 oder 4, **dadurch gekennzeichnet, dass** die mit der Bipolarplatte verbundene äußere Streckmetalllage eine regelmäßige Maschenweite aufweist, wobei die bevorzugte Maschenweite aus einer Maschenbreite von 12 mm und einer Maschenlänge von 6 mm gebildet wird.

6. Bipolarplatten-Elektrodenanordnung nach einem der vorhergehenden Ansprüche, **dadurch gekennzeichnet, dass** die äußere Streckmetalllage einteilig oder wenigstens zweiteilig ausgebildet ist, wobei eine zweiteilige äußere Streckmetalllage ein Streckmetallelement und einen in das Streckmetallelement eingesetzten und mit dem Streckmetallelement, insbesondere stoffschlüssig, verbundenen Metalleinsatz aufweist.

7. Bipolarplatten-Elektrodenanordnung nach Anspruch 6, **dadurch gekennzeichnet, dass** der Metalleinsatz aus Streckmetall oder einem Drahtgewebe gebildet ist.

8. Bipolarplatten-Elektrodenanordnung nach einem der Ansprüche 6 oder 7, **dadurch gekennzeichnet, dass** die äußere Streckmetalllage ausschließlich im Bereich des Metalleinsatzes mit der Bipolarplatte stoffschlüssig verbunden ist.

9. Bipolarplatten-Elektrodenanordnung nach einem der vorhergehenden Ansprüche, **dadurch gekennzeichnet, dass** die stoffschlüssige Verbindung zwischen äußerer Streckmetalllage und Bipolarplatte als Schweißverbindung, insbesondere Widerstandsbuckelschweißverbindung oder Schmelzschweißverbindung, ausgebildet ist.

10. Verfahren zur Herstellung einer Bipolarplatten-Elektrodenanordnung einer Brennstoffzelle oder einer Elektrolysevorrichtung nach einem der Ansprüche 1 bis 9, bei dem,
- eine Gasdiffusionselektrode aus Streckmetalllagen, eine Bipolarplatte und eine zusätzliche Streckmetalllage bereitgestellt werden;
- aus der zusätzlichen Streckmetalllage wenigstens ein mehrere Maschen umfassender flächiger Abschnitt vollständig entfernt wird, wobei aus der zusätzlichen Streckmetalllage wenigstens ein erstes Streckmetallelement in Form des entfernten Abschnitts und ein zweites Streckmetallelement in Form der verbleibenden Streckmetalllage mit einem zum entfernten Abschnitt korrespondierenden Durchgangsloch gebildet wird;
- das zweite Streckmetallelement auf eine äußere Streckmetalllage der Gasdiffusionselektrode mittels Widerstandsschweißen aufgeschweißt wird,
- das erste Streckmetallelement anschließend wieder in das Durchgangsloch des zweiten Streckmetallelements eingesetzt wird,
- die Bipolarplatte auf die der Gasdiffusionselektrode abgewandte flächige Seite des ersten Streckmetallelements mittels Widerstandsbuckelschweißen aufgeschweißt wird, wobei, vorzugsweise in einem Schritt, die Bipolarplatte und das erste Streckmetallelement verschweißt werden und wobei das erste Streckmetallelement und das zweite Streckmetallelement verschweißt werden.

11. Verfahren nach Anspruch 10, **dadurch gekennzeichnet, dass** zur Bildung des ersten Streckmetallelements der Abschnitt aus der zusätzlichen Streckmetalllage mittels Laserschneiden entfernt wird.

12. Verfahren nach einem der Ansprüche 10 oder 11, **dadurch gekennzeichnet, dass** die Gasdiffusionselektrode aus Streckmetalllagen gebildet wird, welche schichtweise gestapelt werden, wobei die Maschenweite der Streckmetalllagen mit zunehmender Stapelhöhe zunimmt.

13. Verfahren nach Anspruch 12, **dadurch gekennzeichnet, dass** das zweite Streckmetallelement auf diejenige Streckmetalllage der Gasdiffusionselektrode aufgeschweißt wird, die innerhalb der Gasdiffusionselektrode die größte Maschenweite aufweist, wobei das zweite Streckmetallelement eine größere Maschenweite aufweist, als die Streckmetalllage der Gasdiffusionselektrode auf die sie aufgeschweißt wird.

14. Verfahren nach einem der Ansprüche 10 bis 13, **dadurch gekennzeichnet, dass** das erste Streckmetallelement derart in das zweite Streckmetallelement eingesetzt wird, dass seine relative Ausrichtung zum zweiten Streckmetallelement derjenigen Ausrichtung vor seiner Entfernung entspricht.

15. Verfahren nach einem der Ansprüche 10 bis 14, **dadurch gekennzeichnet, dass** in Entsprechung des ersten Abschnitts, weitere Abschnitte zur Bildung weiterer Streckmetallelemente aus der zusätzlichen Streckmetalllage und/oder dem zweiten Streckmetallelement vor der Verschweißung des zweiten Streckmetallelements vollständig entfernt werden, wieder in das verschweißte zweite Streckmetallelement eingesetzt werden und anschließend, vorzugsweise gleichzeitig mit dem ersten Streckmetallelement, mit der Bipolarplatte einerseits und dem zweiten Streckmetallelement andererseits mittels Widerstandsbuckelschweißen verschweißt werden.

## Geänderte Patentansprüche

### Geänderte Patentansprüche gemäss Regel 137(2) EPÜ.

1. Bipolarplatten-Elektrodenanordnung einer Brennstoffzelle oder einer Elektrolysevorrichtung, aufweisend einen eine Gasdiffusionselektrode ausbildenden Stapel (11) aus schichtweise angeordneten Streckmetalllagen (4, 5, 6) und eine Bipolarplatte (7), wobei der Stapel (11) in Stapelrichtung wenigstens einendseitig von einer äußeren Streckmetalllage (14) begrenzt ist, wobei die äußere Streckmetalllage (14) flächenhaft mit der Bipolarplatte (7) stoffschlüssig verbunden ist, **dadurch gekennzeichnet, dass** die äußere Streckmettalllage (14) zweiteilig ausgebildet ist und ein Streckmetallelement (9) sowie einen in das Streckmetallelement (9) eingesetzten und mit dem Streckmetallelement (9) stoffschlüssig verbundenen Metalleinsetz (8) aufweist, wobei die äußere Streckmetalllage (14) ausschließlich im Bereich des Metalleinsatzes (8) mit der Bipolarplatte (7) stoffschlüssig verbunden ist.

2. Bipolarplatten-Elektrodenanordnung nach Anspruch 1, **dadurch gekennzeichnet, dass** wenigstens die äußere Streckmetalllage (14) aus Titan gebildet ist.

3. Bipolarplatten-Elektrodenanordnung nach Anspruch 1 oder 2, **dadurch gekennzeichnet, dass** wenigstens die äußere Streckmetalllage (14) eine Gitterstruktur aufweist, wobei die Gitterstruktur aus sich kreuzenden Stegen besteht, die einzelne Maschen (2) einerseits und Kreuzungspunkte (3) andererseits bilden, wobei die flächige Außenseite von einer Vielzahl von in einer gemeinsamen Ebene angeordneter Kreuzungspunkte (3) gebildet ist, wobei stoffschlüssige Verbindungsstellen zwischen jeweils einem Kreuzungspunkt (3) und einem korrespondierenden Kontaktpunkt der Bipolarplatte (7) ausgebildet sind.

4. Bipolarplatten-Elektrodenanordnung nach einem der vorhergehenden Ansprüche, **dadurch gekennzeichnet, dass** wenigstens ein Teil der Streckmetalllagen (4, 5, 6) des Stapels (11) voneinander verschiedene Maschenweiten aufweist, wobei die Streckmetalllagen (4, 5, 6) derart im Stapel aufeinander folgend angeordnet sind, dass die Maschenweite der Streckmetalllagen (4, 5, 6) ausgehend von der mit der Bipolarplatte (7) verbundenen äußeren Streckmetalllage (14) in Stapelrichtung abnimmt.

5. Bipolarplatten-Elektrodenanordnung nach Anspruch 3 oder 4, **dadurch gekennzeichnet, dass** die mit der Bipolarplatte (5) verbundene äußere Streckmetalllage (14) eine regelmäßige Maschenweite aufweist, wobei die bevorzugte Maschenweite aus einer Maschenbreite von 12 mm und einer Maschenlänge von 6 mm gebildet wird.

6. Bipolarplatten-Elektrodenanordnung nach einem der vorhergehenden Ansprüche, **dadurch gekennzeichnet, dass** der Metalleinsatz (8) aus Streckmetall oder einem Drahtgewebe gebildet ist.

7. Bipolarplatten-Elektrodenanordnung nach einem der vorhergehenden Ansprüche, **dadurch gekennzeichnet, dass** die stoffschlüssige Verbindung zwischen äußerer Streckmetalllage (14) und Bipolarplatte (7) als Schweißverbindung, insbesondere Widerstandsbuckelschweißverbindung oder Schmelzschweißverbindung, ausgebildet ist.

8. Verfahren zur Herstellung einer Bipolarplatten-Elektrodenanordnung einer Brennstoffzelle oder einer Elektrolysevorrichtung nach einem der Ansprüche 1 bis 7, bei dem,
- eine Gasdiffusionselektrode aus Streckmetalllagen (4, 5, 6), eine Bipolarplatte (7) und eine zusätzliche Streckmetalllage (14) bereitgestellt werden;
- aus der zusätzlichen Streckmetalllage (14) wenigstens ein mehrere Maschen (2) umfassender flächiger Abschnitt vollständig entfernt wird, wobei aus der zusätzlichen Streckmetalllage (14) wenigstens ein erstes Streckmetallelement (8) in Form des entfernten Abschnitts und ein zweites Streckmetallelement in Form der verbleibenden Streckmetalllage mit einem zum entfernten Abschnitt korrespondierenden Durchgangsloch (10) gebildet wird;
- das zweite Streckmetallelement (9) auf eine äußere Streckmetalllage (4, 5, 6) der Gasdiffusionselektrode mittels Widerstandsschweißen aufgeschweißt wird,
- das erste Streckmetallelement (9) anschließend wieder in das Durchgangsloch (10) des zweiten Streckmetallelements (14) eingesetzt wird,
- die Bipolarplatte (2) auf die der Gasdiffusionselektrode abgewandte flächige Seite des ersten Streckmetallelements (8) mittels Widerstandsbuckelschweißen aufgeschweißt wird, wobei, vorzugsweise in einem Schritt, die Bipolarplatte (7) und das erste Streckmetallelement (8) verschweißt werden und wobei das erste Streckmetallelement (8) und das zweite Streckmetallelement (9) verschweißt werden.

9. Verfahren nach Anspruch 8, **dadurch gekennzeichnet, dass** zur Bildung des ersten Streckmetallelements (8) der Abschnitt aus der zusätzlichen Streckmetalllage (14) mittels Laserschneiden entfernt wird.

10. Verfahren nach einem der Ansprüche 8 oder 9, **dadurch gekennzeichnet, dass** die Gasdiffusionselektrode aus Streckmetalllagen (4, 5, 6) gebildet wird, welche schichtweise gestapelt werden, wobei die Maschenweite der Streckmetalllagen (4, 5, 6) mit zunehmender Stapelhöhe zunimmt.

11. Verfahren nach Anspruch 10, **dadurch gekennzeichnet, dass** das zweite Streckmetallelement (9) auf diejenige Streckmetalllage (4, 5, 6) der Gasdiffusionselektrode aufgeschweißt wird, die innerhalb der Gasdiffusionselektrode die größte Maschenweite aufweist, wobei das zweite Streckmetallelement (9) eine größere Maschenweite aufweist, als die Streckmetalllage (4, 5, 6) der Gasdiffusionselektrode auf die sie aufgeschweißt wird.

12. Verfahren nach einem der Ansprüche 9 bis 11, **dadurch gekennzeichnet, dass** das erste Streckmetallelement (8) derart in das zweite Streckmetallelement (9) eingesetzt wird, dass seine relative Ausrichtung zum zweiten Streckmetallelement (9) derjenigen Ausrichtung vor seiner Entfernung entspricht.

13. Verfahren nach einem der Ansprüche 9 bis 12 **dadurch gekennzeichnet, dass** in Entsprechung des ersten Abschnitts, weitere Abschnitte zur Bildung weiterer Streckmetallelemente (8) aus der zusätzlichen Streckmetalllage (14) und/oder dem zweiten Streckmetallelement (9) vor der Verschweißung des zweiten Streckmetallelements (9) vollständig entfernt werden, wieder in das verschweißte zweite Streckmetallelement (9) eingesetzt werden und anschließend, vorzugsweise gleichzeitig mit dem ersten Streckmetallelement (8), mit der Bipolarplatte (7) einerseits und dem zweiten Streckmetallelement (9) andererseits mittels Widerstandsbuckelschweißen verschweißt werden.
